# EUROPÄISCHE PATENTANMELDUNG

(11) **EP 4 517 711 A1**
(43) Veröffentlichungstag der Anmeldung: **05.03.2025**
(21) Anmeldenummer: 23194499.2
(22) Anmeldetag: 31.08.2023
(51) Int. Cl.: G08G 1/04, G08G 1/0967, H04W 4/46, G08G 1/0965

(54) **VERFAHREN EINER ERSTEN MOBILEN VORRICHTUNG ZUR ERKENNUNG UND ÜBERMITTLUNG EINER OPTISCH ERFASSBAREN INFORMATION EINES KRAFTFAHRZEUGS**

(71) Anmelder: VOLKSWAGEN AG, 38440 Wolfsburg (DE)
(72) Erfinder: Putter, Roman, 38442 Wolfsburg (DE); Rese, Christine, 38100 Braunschweig (DE); Fieback, Laura, 04229 Leipzig (DE); Kempkes, Marie, 38259 Salzgitter (DE)

(57) **Zusammenfassung**

Die Erfindung betrifft ein Verfahren einer ersten mobilen Vorrichtung zur Erkennung und Übermittlung einer optisch erfassbaren Information eines Kraftfahrzeugs. Dabei wird ein wahrnehmbarer Zustand einer außenliegenden Fahrzeugkomponente eines zweiten Kraftfahrzeugs und/oder ein wahrnehmbarer Zustand eines mit dem zweiten Kraftfahrzeug verbundenen und/oder eines sich in dem zweiten Kraftfahrzeug befindendes Objekt basierend auf von einer ersten mobilen Vorrichtung erfassten ersten Zustandsdaten und/oder von einem ersten Nutzer in die erste mobile Vorrichtung eingegebenen zweiten Zustandsdaten ermittelt. Im Anschluss daran wird eine Fahrzeugzustandsmeldung basierend auf dem ermittelten wahrnehmbaren Zustand erstellt. Die Erfindung betrifft ferner ein Verfahren einer zweiten mobilen Vorrichtung zum Empfang und zur Erkennung einer optisch erfassbaren Information eines Kraftfahrzeugs, eine zum Durchführen des erfindungsgemäßen Verfahrens eingerichtete Steuereinheit sowie ein Kraftfahrzeug mit einer solchen Steuereinheit.

## Beschreibung

Die Erfindung betrifft ein Verfahren einer ersten mobilen Vorrichtung zur Erkennung und Übermittlung einer optisch erfassbaren Information eines Kraftfahrzeugs, ein Verfahren einer zweiten mobilen Vorrichtung zum Empfang und zur Erkennung einer optisch erfassbaren Information eines Kraftfahrzeugs, eine zur Durchführung des Verfahrens eingerichtete Steuereinheit sowie ein Kraftfahrzeug mit einer solchen Steuereinheit.

Innerhalb des ruhenden oder fließenden Straßenverkehrs gelten viele Anforderungen an Kraftfahrzeuge und deren Nutzer, um eine erhöhte Sicherheit und Ungestörtheit des Straßenverkehrs sowie seiner Teilnehmer zu gewährleisten. Hierbei können Unregelmäßigkeiten auftreten, die sowohl durch technische Fehler als auch menschliches Versagen verursacht werden können. Dabei ist es nahezu unmöglich, alle diese Unregelmäßigkeiten von vornherein auszuschließen. Insofern verbleibt für diese Situationen die Möglichkeit eines reaktiven Handelns, das auf der Wahrnehmung der Unregelmäßigkeiten und anschließenden Behebung derselben beruht.

Ein üblicher Ansatz besteht dabei darin, dass Verkehrsteilnehmer, die derartige Unregelmäßigkeiten bemerken, diese einem Nutzer des betroffenen Kraftfahrzeugs mitteilen. Dabei verbleibt häufig lediglich das Mitteilen mittels visueller Signale, wie dem Betätigen der Lichthupe oder der Versuch, die Botschaft mittels entsprechender Gestik zu übermitteln, sowie auditiver Signale, wie dem Betätigen der Hupe. Dies setzt jedoch weiterhin voraus, dass der Nutzer des betroffenen Fahrzeugs diese Übermittlung wahrnimmt und registriert. Dies kann jedoch durch nicht vorhandenen Blickkontakt oder Abgelenktheit missglücken. Zudem kann beispielsweise die Lichthupe nur an vorausfahrende Fahrzeuge gesendet werden und erlaubt keine spezifische Information über den Grund der Lichthupe. Auch die Abwesenheit des betroffenen Nutzers kann ein Hindernis darstellen. Für den Fall, dass der betroffene Nutzer die Botschaft wahrnimmt, ist immer noch fraglich, ob er deren Bedeutung richtig interpretiert und das vorliegende Problem charakterisieren kann.

US 2022 / 0 068 136 A1 beschreibt ein Verfahren, das das Erkennen des Vorhandenseins eines Hindernisses in einem Fahrweg eines Fahrzeugs für ein erstes Fahrzeug, das Bestimmen eines Sichtanhalteabstands zwischen einem zweiten Fahrzeug und dem Hindernis für das zweite Fahrzeug und das Übertragen einer Nachricht mit einer Benachrichtigung über das Hindernis an das zweite Fahrzeug, wenn der Sichtanhalteabstand innerhalb eines Schwellenwerts liegt, umfasst.

US 2022 / 0 005 353 A1 beschreibt ein Verfahren zum Übertragen einer kollektiven Wahrnehmungsnachricht durch eine V2X-Kommunikationsvorrichtung eines Fahrzeugs. Das Verfahren umfasst das Erfassen mindestens eines Objekts, das Erzeugen der kollektiven Wahrnehmungsnachricht, die Informationen über das erfasste Objekt enthält und das Übertragen der kollektiven Wahrnehmungsnachricht.

US 2019 / 0 227 555 A1 beschreibt ein Verfahren zur Unterstützung der Kommunikation zwischen einem primären Straßenfahrzeug und anderen Verkehrsteilnehmern, wobei eine Situation beobachtet wird und nach der Beobachtung der Situation eine Luftdrohne auf einen zweiten Verkehrsteilnehmer gerichtet wird. Anschließend erfolgt ein Übermitteln von Informationen über die Situation von der Luftdrohne an den zweiten.

US 11 568 733 B2 beschreibt ein Sensorsystem für Fahrzeuge zur Erkennung unbeaufsichtigter Kinder und/oder Haustiere in einem verschlossenen Fahrzeug. Das Mehrzweck-Sensorsystem umfasst eine Sensoreinheit mit einer Vielzahl von Sensoren, die im Inneren des Fahrzeugs angeordnet sind und Sonnenkollektoren, die an einer Außenfläche des Fahrzeugs angeordnet sind. Die Sensoren erfassen die Innentemperatur des Fahrzeugs und die Körpertemperatur von Kindern und/oder Haustieren. Wenn die Temperatur im Inneren des Fahrzeugs gleich oder höher als ein Schwellenwert ist, wird vom Sensorsystem ein/e Alarm/Warnung erzeugt. Der Alarm wird an ein elektronisches Gerät eines Fahrers, Elternteils oder Betreuers übertragen. Darüber hinaus wird ein Alarm auch an einen Notdienst zur Rettung des Kindes und/oder des Haustiers übermittelt.

Der Erfindung liegt nun die Aufgabe zugrunde, ein Verfahren bereitzustellen, das die genannten Nachteile des Standes der Technik zumindest teilweise überwindet und es ermöglicht, eine optisch erfassbare Information eines Kraftfahrzeugs zu erkennen und zu übermitteln.

Die erfindungsgemäße Aufgabe wird gelöst durch ein Verfahren einer ersten mobilen Vorrichtung zur Erkennung und Übermittlung einer optisch erfassbaren Information eines Kraftfahrzeugs, ein Verfahren einer zweiten mobilen Vorrichtung zum Empfang und zur Erkennung einer optisch erfassbaren Information eines Kraftfahrzeugs, eine zur Durchführung des Verfahrens eingerichtete Steuereinheit sowie ein Kraftfahrzeug mit einer solchen Steuereinheit. Bevorzugte Weiterbildungen sind Gegenstand der jeweils rückbezogenen Unteransprüche.

Ein erster Aspekt der Erfindung betrifft ein Verfahren einer ersten mobilen Vorrichtung zur Erkennung und Übermittlung einer optisch erfassbaren Information eines Kraftfahrzeugs. Dabei wird ein wahrnehmbarer Zustand einer außenliegenden Fahrzeugkomponente eines zweiten Kraftfahrzeugs und/oder ein wahrnehmbarer Zustand eines mit dem zweiten Kraftfahrzeug verbundenen und/oder eines sich in dem zweiten Kraftfahrzeug befindendes Objekt basierend auf von einer ersten mobilen Vorrichtung erfassten ersten Zustandsdaten und/oder von einem ersten Nutzer in die erste mobile Vorrichtung eingegebenen zweiten Zustandsdaten ermittelt. Im Anschluss daran wird eine Fahrzeugzustandsmeldung basierend auf dem ermittelten wahrnehmbaren Zustand erstellt.

Der wahrnehmbare Zustand umfasst Umstände, die sich auf die visuelle Escheinung des Kraftfahrzeugs oder eines mit diesem in Beziehung stehenden Objekts beziehen. Vorzugsweise umfassen die Umstände Defekte und Auffälligkeiten. Demnach beschreibt der wahrnehmbare Zustand von der Norm abweichende Gegebenheiten, die behoben werden sollten. Dabei handelt es sich um lediglich beeinträchtigende Defekte und Auffälligkeiten, die sich beispielsweise auf den Fahrkomfort oder die Effizienz beziehen. Es handelt sich jedoch auch um die Sicherheit betreffende Defekte und Auffälligkeiten, deren Behebung erhöhte Bedeutung zukommt. Da es sich um die äußere Escheinung des Kraftfahrzeugs betreffende Umstände handelt, besteht die Gefahr, dass Nutzer des zweiten Kraftfahrzeugs, die sich in vielen Situationen innerhalb des Kraftfahrzeugs aufhalten, Unkenntnis über diese Defekte und Auffälligkeiten haben.

Vorzugsweise ist der wahrnehmbare Zustand ein visuell wahrnehmbarer Zustand, der folglich optisch erfassbar ist.

Anhand den von der ersten mobilen Vorrichtung erfassten ersten Zustandsdaten und/oder in die erste mobile Vorrichtung eingegebenen zweiten Zustandsdaten wird dann abgeleitet, welcher Defekt oder welche Auffälligkeit vorliegt und somit der wahrnehmbare Zustand ermittelt. Der erste Nutzer ist vorzugsweise Inhaber und/oder Anwender der ersten mobilen Vorrichtung. Ausgehend von dem ermittelten wahrnehmbaren Zustand wird eine Fahrzeugzustandsmeldung erstellt. Demnach lässt sich anhand des ermittelten wahrnehmbaren Zustands eine Fahrzeugzustandsmeldung bestimmen, die abhängig von dem ermittelten wahrnehmbaren Zustand ist, die zur Beschreibung und Mitteilung des ermittelten wahrnehmbaren Zustands geeignet ist.

Schließlich wird die erstellte Fahrzeugzustandsmeldung an die zweite mobile Vorrichtung übermittelt. Somit wird eine Möglichkeit bereitgestellt, eine konkrete optisch erfassbare Information zu ermitteln und mitzuteilen.

Ein zweiter Aspekt der Erfindung betrifft ein Verfahren einer zweiten mobilen Vorrichtung zum Empfang und zur Erkennung einer optisch erfassbaren Information eines Kraftfahrzeugs. Dabei wird eine von einer ersten mobilen Vorrichtung übermittelte, basierend auf einem ermittelten wahrnehmbaren Zustand einer außenliegenden Fahrzeugkomponente eines zweiten Kraftfahrzeugs und/oder eines wahrnehmbaren Zustands eines mit dem zweiten Kraftfahrzeug verbundenen und/oder eines sich in dem zweiten Kraftfahrzeug befindenden Objekts erstellte Fahrzeugzustandsmeldung empfangen. Der Empfänger der empfangenen Fahrzeugzustandsmeldung erhält somit eine Information über das Vorhandensein eines Problems und darüber hinaus eine konkrete Beschreibung dieses Problems, sodass genau bekannt ist, was das Problem ist und ob und wie es gegebenfalls behoben werden kann.

Gemäß einer bevorzugten Ausgestaltung des zweiten Aspekts der Erfindung erfolgt ein Ausgeben der empfangenen Fahrzeugzustandsmeldung. Somit wird eine Möglichkeit bereitgestellt, eine konkrete sicherheitsrelevante Information zu empfangen. Der Empfänger der übermittelten Fahrzeugzustandsmeldung erhält somit eine Information über das Vorhandensein eines Problems und darüber hinaus eine Beschreibung dieses Problems, sodass bekannt ist, was das Problem ist, um abzuleiten, ob und wie es gegebenfalls behoben werden kann.

Vorzugsweise erfolgt die Ausgabe der übermittelten Fahrzeugzustandsmeldung durch Mitteilung an einen zweiten Nutzer und/oder als verarbeitbare Daten an eine Steuereinheit der zweiten mobilen Vorrichtung. Die Mitteilung an den zweiten Nutzer wird entweder in Form einer Anzeige, insbesondere eines Displays des zweiten Kraftfahrzeugs und/oder in Form einer Sprachausgabe über Lautsprecher des Kraftfahrzeugs durchgeführt. Der zweite Nutzer ist vorzugsweise Inhaber oder Anwender der zweiten mobilen Vorrichtung und/oder des zweiten Kraftfahrzeugs.

In einer ersten bevorzugten Ausgestaltung der Erfindung ist vorgesehen, dass eine Freigabe der erstellten Fahrzeugzustandsmeldung und/oder der empfangenen Fahrzeugzustandsmeldung basierend auf einer Bestätigungsanweisung erfolgt und die erstellte Fahrzeugzustandsmeldung übermittelt wird und/oder die empfangene Fahrzeugzustandsmeldung ausgegeben wird, sofern die ermittelte Freigabe eine Zustimmung anzeigt. Demnach wird die erstellte Fahrzeugzustandsmeldung basierend auf einer Bestätigungsanweisung freigegeben. Die Bestätigungsanweisung ist zu verstehen als Anweisung, die positiv oder negativ ist. Bei einer positiven Bestätigungsanweisung wird die Fahrzeugzustandsmeldung übermittelt, bei einer negativen Bestätigungsanweisung dagegen nicht. Ferner wird bei einer positiven Bestätigungsanweisung die empfangene Fahrzeugzustandsmeldung ausgegeben, bei einer negativen Zustimmungsanweisung dagegen nicht. Die Bestätigungsanweisung dient somit zur Kontrolle der erstellten beziehungsweise empfangenen Fahrzeugzustandsmeldung. Wird festgestellt, dass diese falsch oder unvollständig ist, besteht die Möglichkeit, die Bestätigung zu verweigern, sodass eine Übermittlung beziehungsweise Ausgabe einer fehlerhaften Information unterbleibt. Auf der anderen Seite wird bei richtiger und vollständiger oder ausreichend vollständig erstellter Fahrzeugzustandsmeldung die Bestätigung erteilt.

Vorzugsweise erfolgt die Bestätigungsanweisung durch den ersten Nutzer, einen zweiten Nutzer der zweiten mobilen Vorrichtung und/oder eine Steuereinheit der ersten und/oder zweiten mobilen Vorrichtung. Der zweite Nutzer ist vorzugsweise Inhaber oder Anwender der zweiten mobilen Vorrichtung und/oder des zweiten Kraftfahrzeugs. Demnach hat für den Fall des ersten Aspekts der Erfindung der erste Nutzer selbst die Möglichkeit, eine Bestätigung zu erteilen oder zu verweigern. Entsprechendes gilt für den zweiten Aspekt der Erfindung und den zweiten Nutzer. Demzufolge wird die erstellte Fahrzeugzustandsmeldung vor einem Übermitteln durch den ersten Nutzer und/oder die Steuereinheit der ersten und/oder zweiten mobilen Vorrichtung überprüft. Der erste Nutzer überprüft gemäß einer ersten Variante, bei der der wahrnehmbare Zustand basierend auf den von dem ersten Nutzer eingegebenen zweiten Zustandsdaten und/oder basierend auf von der ersten mobilen Vorrichtung erfassten ersten Zustandsdaten ermittelt wurde, die Richtigkeit und Plausibilität der Ausgabe. So kann beispielsweise der Fall auftreten, dass der erste Nutzer sich bei der Eingabe vertan oder geirrt hat oder der Defekt oder die Auffälligkeit mittlerweile nicht mehr vorliegt. Somit ist sichergestellt, dass der Vorgang noch unterbrochen oder korrigiert werden kann. Für den Fall, dass der wahrnehmbare Zustand basierend auf erfassten ersten Zustandsdaten ermittelt wurde, wird ebenfalls die Richtigkeit und Plausibilität der Ausgabe überprüft und dann gegebenfalls durch den ersten Nutzer positiv bestätigt. Alternativ kann bei einer zweiten Variante die Bestätigungsanweisung durch die Steuereinheit erfolgen. Hierbei überprüft die Steuereinheit ebenfalls die Plausibilität und Richtigkeit. Insbesondere umfasst in diesem Fall die erste mobile Vorrichtung bevorzugt zusätzliche Zustandserfassungsmittel wie eine Außenkamera, die zweite Zustandsdaten, die dann vorzugsweise Bildaufnahmen umfassen, erfasst. Vorzugsweise ermittelt die Steuereinheit des ersten Kraftfahrzeugs ebenfalls einen weiteren wahrnehmbaren Zustand und vergleicht diesen mit dem basierend auf den von dem ersten Nutzer eingegebenen zweiten Zustandsdaten ermittelten wahrnehmbaren Zustand. Anhand dieses Vergleichs wird dann abgeleitet, ob der ermittelte und der weitere ermittelte wahrnehmbare Zustand miteinander korrelieren oder gänzlich auseinanderfallen. Basierend auf dem Ergebnis dieses Vergleichs erfolgt dann eine entsprechende Bestätigungsanweisung durch die Steuereinheit des Kraftfahrzeugs. Hierdurch wird ein "Vier-Augen-Prinzip" eingeführt, das die Zuverlässigkeit der Ausgabe sicherstellt. Somit bietet das Verfahren einen Kontrollmechanismus und fährt nur fort, wenn ein positive Bestätigung erteilt wird.

In weiterer bevorzugter Ausgestaltung der Erfindung wird eine positive Bestätigungsanweisung nach Ablauf eines Zeitintervalls angenommen. In diesem Fall wird die Situation berücksichtigt, dass eine Bestätigungsanweisung ausbleibt. Dies kann auf einen untätigen ersten Nutzer und/oder zweiten Nutzer zurückzuführen sein, der keine Bestätigungsanweisung vornimmt oder ein Ausbleiben einer Bestätigungsanweisung durch eine Steuereinheit der ersten und/oder zweiten mobilen Vorrichtung. Um eine möglicherweise bedeutsame sicherheitsrelevante Information dennoch zu übermitteln, wird nach Ablauf des Zeitintervalls eine Bestätigungsanweisung als vorgenommen fingiert. Demnach wird die Ausgabe übermittelt, sodass eine Information nicht unberücksichtigt bleibt.

In bevorzugter Ausgestaltung der ersten bevorzugten Ausgestaltung der Erfindung ist vorgesehen, dass das Verfahren vor einer Freigabe der erstellten Fahrzeugzustandsmeldung und/oder der empfangenen Fahrzeugzustandsmeldung basierend auf einer Bestätigungsanweisung ferner ein Ermitteln einer Signifikanz der erstellten Fahrzeugzustandsmeldung und/oder der empfangenen Fahrzeugzustandsmeldung basierend auf einer Sicherheitsrelevanz, einer Unsicherheit und/oder einer Übereinstimmung der ersten Zustandsdaten und/oder der zweiten Zustandsdaten umfasst. Signifikanz bedeutet im Rahmen der vorliegenden Erfindung die Bedeutsamkeit der erstellten Fahrzeugzustandsmeldung. Mit anderen Worten ist darunter zu verstehen, wie verlässlich die erstellte Fahrzeugzustandsmeldung ist und wie wichtig es ist, die erstellten Fahrzeugzustandsmeldung zu übermitteln und/oder zu empfangen. Dabei wird die Signifikanz unter Berücksichtigung der Sicherheitsrelevanz und/oder der Unsicherheit ermittelt. Die Sicherheitsrelevanz umfasst Informationen, die erheblich für die Sicherheit eines zweiten Nutzers, des ersten Nutzers und/oder weiterer potentieller Personen und Gegenstände ist. Beispielsweise wird anhand eines erfassten offenen Kofferraums oder ungesicherter Ladung eine hohe Sicherheitsrelevanz angenommen, da auf eine Fahrbahn fallende Gegenstände eine potentielle Gefahr darstellen können. Die Unsicherheit umfasst bevorzugt Informationen über die Daten wie beispielsweise eine Qualität einer Bildaufnahme, die beispielsweise durch Nebel oder Verwackeln eingeschränkt ist. Eine hohe Sicherheitsrelevanz erhöht die Signifikanz, wohingegen eine hohe Unsicherheit die Signifikanz vermindert. Die Signifikanz wird vorzugsweise zudem beeinflusst durch die Übereinstimmung mehrerer erster und/oder zweiter Zustandsdaten. Übereinstimmung im Rahmen der vorliegenden Erfindung ist zu verstehen als eine Ausprägung der Übereinstimmung der ersten Zustandsdaten untereinander, einer Übereinstimmung der zweiten Zustandsdaten untereinander und/oder einer Übereinstimmung der ersten mit den zweiten Zustandsdaten. Beispielweise liegen durch verschiedene Zustandserfassungsmittel erfasste erste Zustandsdaten vor, die untereinander stark übereinstimmen, also konsistent sind, wodurch eine Erhöhung der Signifikanz erfolgt. Aber auch übergreifend ist die Übereinstimmung ein signifikanzbeeinflussender Faktor, falls beispielsweise die ersten Zustandsdaten und die zweiten Zustandsdaten miteinander übereinstimmen, unabhängig von den Faktoren Sicherheitsrelevanz und/oder Unsicherheit. Diese werden jedoch nicht zwangsläufig vernachlässigt, sondern beeinflussen, falls vorgesehen, ebenfalls die gesamte Signifikanz. Demnach erfolgt hierdurch eine qualitative Bewertung der erstellten Fahrzeugzustandsmeldung.

Bevorzugt erfolgt eine Gewichtung der Sicherheitsrelevanz und der Unsicherheit. Insbesondere wird die Sicherheitsrelevanz stärker gewichtet als die Unsicherheit, um eine höhere Sicherheit zu gewährleisten. Demnach wird die Signifikanz basierend auf der Sicherheitsrelevanz und der Unsicherheit ermittelt. Ein hohe Unsicherheit würde möglicherweise zu einer normalen Signifikanz führen. Aufgrund der Gewichtung wird jedoch eine höhere Unsicherheit "in Kauf genommen", da auf der anderen Seite eine erhöhte Sicherheitsrelevanz vorliegt, die stärker berücksichtigt werden soll, um bei der Sicherheit weniger Kompromisse einzugehen.

Gemäß einer weiteren bevorzugten Ausgestaltung der Erfindung erfolgt die Bestätigungsanweisung durch den ersten Nutzer, den zweiten Nutzer, die erste mobile Vorrichtung und/oder die zweite mobile Vorrichtung basierend auf der ermittelten Signifikanz. Mit anderen Worten wird bei der Bestätigungsanweisung die zuvor ermittelte Signifikanz berücksichtigt. Der erste und/oder zweite Nutzer leitet dann aus der Signifikanz ab, wie wichtig die Übermittlung der Ausgabe ist und entscheidet sich bei der Bestätigungsanweisung dementsprechend. Alternativ verarbeitet die Steuereinheit der ersten und/oder zweiten mobilen Vorrichtung die Signifikanz und ermittelt basierend darauf, ob eine positive oder negative Bestätigungsanweisung erfolgt. Vorzugsweise wird die Signifikanz mit einem Schwellenwert und/oder einer Bedingung verglichen. Übersteigt die ermittelte Signifikanz den Schwellenwert und/oder erfüllt die Bedingung, erfolgt darauf basierend eine positive Bestätigungsanweisung. Für den Fall, dass sowohl erste Zustandsdaten als auch zweite Zustandsdaten vorliegen und demnach vorzugsweise auch ein erster wahrnehmbarer Zustand und ein zweiter wahrnehmbarer Zustand ermittelt wurden, ist vorzugsweise vorgesehen, dass der erste Nutzer basierend auf der Signifikanz eine Bestätigungsanweisung durch die Steuereinheit der ersten mobilen Vorrichtung überstimmen kann und demnach entscheidet, ob ein Übermitteln erfolgen oder ausbleiben soll. Umgekehrt ist dies auch der Fall. Mit anderen Worten kann die Steuereinheit der ersten mobilen Vorrichtung den ersten Nutzer überstimmen. Dadurch wird berücksichtigt, dass sowohl eine fehlerhafte oder ursprünglich falsch eingestufte Information nicht übermittelt wird, als auch eine tatsächlich wichtige sicherheitsrelevante, jedoch falsch eingestufte Information übermittelt wird, basierend auf einer zusätzlichen Kontrolle. Analoge Abläufe gelten auch bevorzugt für die ermittelte Freigabe zum Ausgeben der empfangenen Fahrzeugzustandsmeldung. Möglicherweise entscheidet sich der zweite Nutzer gegen ein Ausgeben der empfangenen Fahrzeugzustandsmeldung, die Steuereinheit der zweiten mobilen Vorrichtung überstimmt diese negative Bestätigungsanweisung jedoch, da eine erhöhte Signifikanz vorliegt.

Gemäß einer weiteren Ausführung der Erfindung ist vorgesehen, dass das Verfahren vor einer Freigabe der erstellten Fahrzeugzustandsmeldung und/oder der empfangenen Fahrzeugzustandsmeldung basierend auf einer Bestätigungsanweisung ferner ein Ermitteln einer Signifikanz der erstellten Fahrzeugzustandsmeldung und/oder der empfangenen Fahrzeugzustandsmeldung basierend auf einer Qualität des ermittelten wahrnehmbaren Zustands umfasst. In diesem Zusammenhang ist unter der Qualität eine Zuverlässigkeit des ermittelten wahrnehmbaren Zustands zu verstehen. Diese wird vorzugsweise beeinflusst durch eine Validierung eines Modells, das für die Ermittlung des wahrnehmbaren Zustands verwendet wird, indem untersucht wird, wie gut das Modell die reale Welt abbildet. Dazu werden vorzugsweise experimentelle Ergebnisse mit Simulationsergebnissen verglichen und dienen dann als Grundlage für die Bewertung der Qualität, beispielweise in Form einer Datenbank, indem anhand der vorliegenden Daten entsprechende Ableitungen für die Validierung zugrunde gelegt werden. In Abhängigkeit von Spezifikation und Verwendungszweck wird das Modell auf Basis der Simulationsergebnisse bestätigt, verworfen oder eine Bewertung zwischen diesen beiden Extremen vorgenommen. Ein weiterer bevorzugter beeinflussender Faktor ist die Verifikation des Modells, bei der geprüft wird, ob die vorhandene mathematische Beschreibung des Systems richtig implementiert ist und ausreichend genau gelöst wird. Dadurch werden Implementierungsfehler aufgedeckt und das Vertrauen in das Modell wird gestärkt. Hierdurch werden potentielle Unsicherheiten, die durch Vorhersagefehler eines Modells, das für die Ermittlung des wahrnehmbaren Zustands verwendet wird, auftreten können, berücksichtigt.

Besonders bevorzugt umfasst die erste und/oder zweite mobile Vorrichtung ein Kraftfahrzeug. Im Straßenverkehr begegnen sich eine Vielzahl von Kraftfahrzeugen. Diese eignen sich demnach besonders als erste mobile Vorrichtung und stellen dann einen Beobachter dar, der das zweite Kraftfahrzeug von außen wahrnimmt und deshalb besonders zuverlässig dessen wahrnehmbaren Zustand ermittelt. Auf der anderen Seite eignet sich demnach besonders ein Kraftfahrzeug als zweite mobile Vorrichtung, da dieses vielfach Unkenntnis über seinen eigenen wahrnehmbaren Zustand besitzt. Diese Unkenntnis wird behoben durch den Empfang von Informationen über dessen eigenen Zustand.

Vorzugsweise umfasst die erste und/oder zweite mobile Vorrichtung ein Smartphone.

Gemäß einer weiteren bevorzugten Ausgestaltung der Erfindung wird die übermittelte und/oder empfangene Fahrzeugzustandsmeldung an ein der zweiten mobilen Vorrichtung zugewiesenes Smartphone übermittelt. Insbesondere im Fall von voll automatisieren Kraftfahrzeugen als zweite mobile Vorrichtung, die keinen Insassen aufweisen oder Kraftfahrzeugen, deren Nutzer sich temporär vom Kraftfahrzeug entfernt hat, wird somit sichergestellt, dass die Fahrzeugzustandsmeldung nicht nur an die zweite mobile Vorrichtung übermittelt und/oder von dieser empfangen wird, sondern auch an ein Smartphone, das der Nutzer üblicherweise bei sich trägt, sodass er unabhängig vom örtlichen Zusammenhang mit dem zweiten Kraftfahrzeug informiert wird und entsprechend reagieren kann.

In einer weiteren Ausgestaltung der Erfindung ist vorgesehen, dass das dem zweiten Kraftfahrzeug zugewiesene Smartphone auf einer Festlegung von einem zweiten Nutzer basiert. Demnach kann der zweite Nutzer bestimmen, an welches Smartphone die Ausgabe übermittelt wird. So wird berücksichtigt, dass beispielsweise bei Car-Sharing-Unternehmen zusätzlich zu dem momentanen Fahrzeugführer der Betreiber des Car-Sharing-Unternehmens die sicherheitsrelevante Information erhält. Auch bei privat genutzten zweiten Kraftfahrzeugen, deren Fahrer beispielsweise häufig wechseln, weil mehrere Personen das zweite Kraftfahrzeug führen dürfen, ist es vorteilhaft, dass der momentane Fahrer als zweiter Nutzer eine Information erhält, in anderen Situation jedoch nicht.

In bevorzugter Ausgestaltung der Erfindung ist vorgesehen, dass die erstellte Fahrzeugzustandsmeldung vorgefertigte Nachrichteninhalte, die ersten Zustandsdaten und/oder die zweiten Zustandsdaten umfasst. Demnach wird vorzugsweise die erstellte Fahrzeugzustandsmeldung unter Verwendung vorgefertigter Nachrichten ermittelt. Demnach steht eine vorgefertigte Nachrichteninhaltssammlung zur Verfügung, die eine Vielzahl an vorgefertigten Nachrichteninhalten umfasst. Dies stellt mit anderen Worten einen "Pool" aus vorgefertigten Nachrichteninhalten dar, von denen eine geeigneter Nachrichteninhalt basierend auf dem wahrnehmbaren Zustand ermittelt wird. Vorzugsweise handelt es sich um kurze und präzise Texte wie Sätze, die einem Empfänger direkt die Erfassung der sicherheitsrelevanten Information ermöglichen. Zudem wird sichergestellt, dass neutrale Nachrichteninhalte übermittelt werden und kein Missbrauch durch Übermittlung unangemessener, ablenkender und/oder täuschender Information erfolgt. Ferner muss sich ein erster Nutzer nicht damit beschäftigen, einen geeigneten Nachrichteninhalt zu erstellen, wodurch seine Aufmerksamkeit nicht beeinträchtigt wird. Darüber hinaus stellen die ersten Zustandsdaten und/oder die zweiten Zustandsdaten zusätzlich Informationsquellen dar, die bei Bedarf zur Verfügung stehen und genutzt werden können, sofern die erstellte Fahrzeugzustandsmeldung diese umfasst.

In weiterer bevorzugter Ausgestaltung der Erfindung ist vorgesehen, dass die von dem ersten Nutzer eingegebenen zweiten Zustandsdaten ein Schlagwort aus einer Schlagwortsammlung umfassen. Mit anderen Worten wird im Vorfeld eine Reihe möglicher Defekte und Auffälligkeiten identifiziert und anhand dessen eine Schlagwortsammlung bereitgestellt, die insbesondere auf einer Speichereinheit der ersten mobilen Vorrichtung vorliegt. Dabei erfolgt die Eingabe des ersten Nutzers vorzugsweise über die erste mobile Vorrichtung, insbesondere über eine Eingabekonsole. Weiterhin erfolgt die Eingabe bevorzugt unter Verwendung einer Eingabekonsole eines Kraftfahrzeugs und/oder eines Smartphones. Der erste Nutzer hat durch beide geschilderten Eingabevarianten die Möglichkeit, die Eingabe der zweiten Zustandsdaten in Form von Schlagworten durchzuführen. Dies vereinfacht die Eingabe der zweiten Zustandsdaten. Zudem wird die Aufmerksamkeit des ersten Nutzers nicht beeinträchtigt, da die Eingabe eines Schlagworts in einfacher und intuitiver Weise erfolgt.

In weiterer bevorzugter Ausgestaltung der Erfindung erfolgt ein Verifizieren der einen der ersten und/oder zweiten Zustandsdaten anhand der anderen der ersten und/oder zweiten Zustandsdaten. Demzufolge liegen sowohl erste Zustandsdaten als auch zweite Zustandsdaten vor. Anhand einer Analyse der Daten wird dann festgestellt, ob diese konsistent sind, also plausibel sind und zueinander passen. Vorzugsweise umfasst die erste mobile Vorrichtung ein Kraftfahrzeug mit einer Steuereinheit sowie Zustandserfassungsmitteln wie einer Außenkamera, die zweite Zustandsdaten, die dann vorzugsweise Bildaufnahmen umfassen, erfasst. Zudem liegen erste Zustandsdaten, beispielsweise eingegeben durch den ersten Nutzer, vor. Wiedersprechen sich die Daten, deutet das daraufhin, dass zumindest eine der ersten und zweiten Zustandsdaten fehlerhaft sind. Vorzugsweise erfolgt dann eine erneute Datenaufnahme oder Meldung an den ersten Nutzer über diesen Widerspruch, bevor eine Ausgabe ermittelt wird.

Besonders bevorzugt wird ein erster wahrnehmbarer Zustand der außenliegenden Fahrzeugkomponente des zweiten Kraftfahrzeugs und/oder ein erster wahrnehmbarer Zustand des mit dem zweiten Kraftfahrzeug verbundenen und/oder des sich in dem zweiten Kraftfahrzeug befindenden Objekts des zweiten Kraftfahrzeugs basierend auf erfassten ersten Zustandsdaten und ein zweiter wahrnehmbarer Zustand der außenliegenden Fahrzeugkomponente des zweiten Kraftfahrzeugs und/oder ein zweiter wahrnehmbarer Zustand des mit dem zweiten Kraftfahrzeug verbundenen und/oder des sich in dem zweiten Kraftfahrzeug befindenden Objekts des zweiten Kraftfahrzeugs basierend auf von einem ersten Nutzer eingegebenen zweiten Zustandsdaten ermittelt und einer des ersten wahrnehmbaren Zustands und des zweiten wahrnehmbaren Zustands basierend auf einem Vergleich des ersten wahrnehmbaren Zustands und des zweiten wahrnehmbaren Zustands verifiziert. Hierdurch wird ein Kontrollmechanismus vorgesehen, der eine erhöhte Zuverlässigkeit einer im weiteren Verlauf erstellten Fahrzeugzustandsmeldung sicherstellt.

Gemäß einer weiteren bevorzugten Ausführung der Erfindung werden die erfassten ersten Zustandsdaten unter Verwendung von Zustandserfassungsmitteln der ersten mobilen Vorrichtung, vorzugsweise einer Kamera und/oder einer Infrarotkamera, erfasst. Insbesondere umfasst die erste mobile Vorrichtung ein Kraftfahrzeug und/oder ein Smartphone, die vorzugsweise eine Außenkamera und/oder eine Infrarotkamera umfassen. Kamerabasierte Lösungen wie die Außenkamera oder Infrarotkamera oder Smartphonekamera erfassen ebenfalls Defekte und Auffälligkeiten an dem zweiten Kraftfahrzeug. Sie detektieren durch Aufnahme von Bildern die äußere Erscheinung des zweiten Kraftfahrzeugs in Form von Bilddaten. Im Falle eines vollautonomen Kraftfahrzeugs als erste mobile Vorrichtung werden die Zustandserfassungsmittel genutzt, um sicherheitskritische Defekte eigenständig zu erfassen. Die von der Außenkamera oder Infrarotkamera erfassten Bilder stellen dann die ersten Zustandsdaten dar, anhand derer dann der wahrnehmbare Zustand ermittelt wird. Hierdurch wird ein erster Nutzer der ersten mobilen Vorrichtung entlastet, da die Zustandserfassungsmittel wie "Augen" des ersten Nutzers fungieren. Somit wird die Wahrscheinlichkeit, dass eine optisch erfassbare Information unentdeckt bleibt, stark verringert und die Sicherheit weiter erhöht.

Bevorzugt umfasst das Verfahren ferner das Ermitteln eines wahrnehmbaren Zustands einer außenliegenden Fahrzeugkomponente einer Vielzahl von zweiten Kraftfahrzeugen und/oder eines wahrnehmbaren Zustands eines mit einer Vielzahl von zweiten Kraftfahrzeugen verbundenen Objekts, wobei das Übermitteln der erstellten Fahrzeugzustandsmeldung an eine Vielzahl von zweiten mobilen Vorrichtungen erfolgt. Hier werden die erstellte Fahrzeugzustandsmeldung nicht nur an eine zweite mobile Vorrichtung, sondern an eine Vielzahl von zweiten mobilen Vorrichtungen übermittelt. Hierdurch ist es möglich, die optisch erfassbare Informationen mit anderen Verkehrsteilnehmer zu teilen. Insbesondere bei aktivierten Bremsleuchten mit gleichzeitig aktivierten Warnblinkern lassen sich Rückschlüsse über einen Stau oder dichten Verkehr ziehen, sodass dann eine Mitteilung an eine Vielzahl von Verkehrsteilnehmer wichtig ist.

Vorzugsweise basiert die Vielzahl von zweiten mobilen Vorrichtungen auf einem ermittelten Abstand zur ersten mobilen Vorrichtung. Dieser Abstand umfasst bevorzugt einen konkreten Wert, insbesondere 1 km. Hierdurch können sich durch Kenntnisnahme dieser Information die Vielzahl von zweiten Kraftfahrzeugen auf ein Bremsmanöver einstellen. Dies erhöht besonders bei hohen Geschwindigkeiten und kurvigen Strecken die Sicherheit.

Der Abstand basiert bevorzugt auf erfassten und/oder abgerufenen Umgebungsdaten und/oder Fahrdaten. Mit anderen Worten wird der Abstand basierend auf einer momentanen Situation ermittelt. Dadurch werden Umstände wie die Art einer Straße, deren Verlauf, zulässige Geschwindigkeit, eigen Fahrgeschwindigkeit und so weiter berücksichtigt. Beispielsweise erhöhen hohe Geschwindigkeiten, Befahren einer Autobahn oder eine kurvenreiche Strecke den Abstand, da eine frühzeitige Kenntnis die Sicherheit erhöht.

Besonders bevorzugt umfasst das zweite Kraftfahrzeug ein parkendes Kraftfahrzeug und die von dem ersten Nutzer eingegebenen zweiten Zustandsdaten umfassen eine Bildaufnahme. Die Bildaufnahme ist eine Bildaufnahme des zweiten Kraftfahrzeugs und/oder eines Teils des zweiten Kraftfahrzeugs. In dieser Ausführung werden auch bei einem parkenden zweiten Kraftfahrzeug Nachrichten an die zweite mobile Vorrichtung übermittelt. Vorzugsweise wird die ermittelte Fahrzeugzustandsmeldung dann an ein Smartphone eines zweiten Nutzers weitergeleitet. Hierbei legt der zweite Nutzer bevorzugt fest, an welches Smartphone solche Hinweise übermittelt werden sollen. Hierdurch wird der zweite Nutzer über verschiedene Szenarien anhand der ermittelten Ausgabe informiert. Insbesondere umfassen die zweiten Zustandsdaten Informationen über angelassene Beleuchtung innerhalb und/oder außerhalb des Kraftfahrzeugs, ein im Kraftfahrzeug befindliches Tier und/oder Kleinkind, insbesondere in Verbindung mit hohen Temperaturen, eine offenes Fenster, ein aufgebrochenes Kraftfahrzeug und/oder eine Autokralle am Reifen. Demnach wird es dem zweiten Nutzer ermöglicht, die mitgeteilten Umstände zu beheben.

Vorzugsweise umfasst das zweite Kraftfahrzeug ein parkendes Kraftfahrzeug und die ersten Zustandsdaten eine Position des zweiten Kraftfahrzeugs. Bevorzugt wird die erstellte Fahrzeugzustandsmeldung an den zweiten Nutzer gesendet, sobald sich die Position des Autos verändert. Hierzu aktiviert der zweite Nutzer vorzugsweise beim Abstellen des Autos über ein zugewiesenes Smartphone oder eine Eingabevorrichtung des zweiten Kraftfahrzeugs einen Parkmodus. Eine Ausgabe über einen möglichen Diebstahl wird in diesem Fall nur dann abgesendet, wenn dieser Parkmodus aktiviert wurde. Bei gemeinschaftlicher Nutzung eines Fahrzeugs können alle Nutzer den Parkmodus ein- und ausschalten.

In weiterer bevorzugter Ausgestaltung der Erfindung ist vorgesehen, dass ein Verifizieren der ermittelten Fahrzeugzustandsmeldung basierend auf einer Bildauswertung der Bildaufnahme erfolgt. Hierdurch erfolgt eine Verifizierung der Echtheit der ermittelten Fahrzeugzustandsmeldung. Es wird ein Missbrauch vermieden, indem basierend auf einer Bildauswertung überprüft wird, ob es sich um eine Falschmeldung handelt oder der Defekt tatsächlich vorliegt. Erst nach erfolgreicher Verifizierung wird die Nachricht an den Besitzer gesendet und Falschmeldungen oder Missbrauch werden vermieden.

Vorzugsweise umfasst das zweite Kraftfahrzeug ein fahrendes Kraftfahrzeug, das insbesondere teil- oder vollautonom ist und/oder durch einen zweiten Nutzer geführt wird. Der zweite Nutzer hat nur eingeschränkt die Möglichkeit, Defekte und Auffälligkeiten am zweiten Kraftfahrzeug zu erfassen. Hierbei steht ihm üblicherweise lediglich seine eigene Sichtachse sowie die über die Seitenspiegel oder Rückspiegel wahrnehmbare Sicht zur Verfügung. Beides liefert nur eine Sicht auf Teile und Ausschnitte des Kraftfahrzeugs. Demnach erfolgt durch das erfindungsgemäße Verfahren eine Unterstützung des zweiten Kraftfahrzeugs und/oder des zweiten Nutzers. Hierdurch wird der Komfort und die Sicherheit erheblich verbessert. Gemäß dieser Ausführung wird die Zustimmungsanweisung vorzugsweise durch den zweiten Nutzer eingegeben.

Vorzugsweise werden die zweiten Zustandsdaten unter Verwendung einer Sprachsteuerung und/oder einer Bildschirmeingabe erfasst. Demnach wird dem ersten Nutzer eine einfache Möglichkeit zur Eingabe der zweiten Zustandsdaten ermöglicht. Bei einer Sprachsteuerung spricht der erste Nutzer die Defekte oder Auffälligkeiten, die er bemerkt, einfach aus. Besonders bevorzugt ist eine Kombination mit der Verwendung eines Schlagworts aus einer Schlagwortsammlung. Gerade beim Führen eines Kraftfahrzeugs, das vorzugsweise die erste mobile Vorrichtung ist, kann es sein, dass der erste Nutzer sich auf das eigene Kraftfahrzeug und den Verkehr fokussieren muss. Er muss sich dann keine komplizierten Sätze oder Mitteilungen ausdenken, sondern kann auf Schlagworte zurückgreifen wie zum Beispiel "Scheinwerfer defekt" oder "offener Kofferraum". Eine Steuereinheit der ersten mobilen Vorrichtung verarbeitet diese anschließend. Bei Verwendung einer Bildschirmeingabe erfolgt die Eingabe des ersten Nutzers insbesondere über eine Eingabekonsole der ersten mobilen Vorrichtung Die Eingabekonsole kann eine Mittelkonsole eines Kraftfahrzeugs umfassen und/oder ein Display eines Smartphones. Vorzugsweise gelangt der erste Nutzer durch Auswahl eines Eingabemodus zu der Schlagwortsammlung, die ihm vorzugsweise über die Eingabekonsole und/oder das Display angezeigt wird. Beispielsweise kann es sich um ein Menü handeln, innerhalb dessen die Schlagworte angeordnet sind. Alternativ kann eine Übersicht angezeigt werden, sodass der erste Nutzer zunächst auswählt, ob es sich beispielsweise um das System "Beleuchtung", "Türen", "Fenster" und/oder "Kofferraum" handelt. Nach Auswahl des entsprechenden Systems werden dann alle denkbaren Defekte das System betreffend angezeigt und es muss lediglich eine Auswahl erfolgen, wodurch die Eingabe durch den ersten Nutzer abgeschlossen ist.

Vorzugsweise erfolgt das Ausgeben der übermittelten Fahrzeugzustandsmeldung und/oder der empfangenen Fahrzeugzustandsmeldung unter Verwendung einer Sprachsteuerung oder Anzeige.

Vorzugsweise wird die ausgegebene Fahrzeugzustandsmeldung basierend auf einer festgestellten Untätigkeit an eine Behörde übermittelt. Dies ist insbesondere vorteilhaft, wenn der wahrnehmbare Zustand ein aufgebrochenes Kraftfahrzeug, ein falschparkendes Auto, eine Gefahrensituation für im Kraftfahrzeug eingeschlossene Kinder und/oder Tiere und dergleichen umfasst. Demnach wird insbesondere bei sicherheitsrelevanten Umständen ein Eingreifen ermöglicht, falls der Nutzer des zweiten Kraftfahrzeugs untätig ist.

In besonders bevorzugter Ausgestaltung der Erfindung umfasst der wahrnehmbare Zustand der außenliegenden Fahrzeugkomponente des zweiten Kraftfahrzeugs und/oder des mit dem zweiten Kraftfahrzeugs verbundenen und/oder des sich in dem zweiten Kraftfahrzeug befindenden Objekts einen defekten Scheinwerfer, einen offenen Kofferraum, eine ungesicherte Ladung, einen beschädigte Reifen, aktivierte Bremsleuchten mit gleichzeitig aktivierten Warnblinkern, sofern das zweite Kraftfahrzeug ein fahrendes Kraftfahrzeug ist und ein angelassenes Licht, ein Tier/Kleinkind im Auto (bei hohen Temperaturen), ein offenes Fenster, ein aufgebrochenes Auto, einen offenen Kofferraum, einen beschädigte Reifen, eine Autokralle am Reifen und oder ein ordnungswidrig abgestelltes Kraftfahrzeug, sofern das zweite Kraftfahrzeug ein parkendes Kraftfahrzeug ist. Hierdurch werden wesentliche optisch wahrnehmbare Informationen des zweiten Kraftfahrzeugs abgedeckt, deren Kenntnis erheblich ist und die demnach schnell erkannt und behoben werden können. Bevorzugt umfasst der wahrnehmbare Zustand ferner Informationen über beschädigte Fenster und/oder in Kraftfahrzeugtüren eingeklemmte und heraushängende Gegenstände, wie Kleidungsstücke. Alle vorhergehende beschriebenen Zustände stellen Umstände dar, die einerseits die Effizienz des zweiten Kraftfahrzeugs vermindern und andererseits Auswirkungen auf das zweite Kraftfahrzeug sowie andere Kraftfahrzeuge und Verkehrsteilnehmer haben können. Aus einem offenen Kofferraum können Gegenstände fallen, ein defektes Licht kann die Sicht und die Sichtbarkeit verschlechtern und ungesicherte Ladung kann auf die Fahrbahn fallen. Beschädigte Fenster können ein kleiner Steinschlag sein, der in diesem Zustand noch ohne hohen Aufwand behoben werden kann, sich beim Ignorieren jedoch vergrößern und in Rissen der Scheibe resultieren kann. Manche dieser Defekte und Auffälligkeiten können zwar durch interne Systeme überwacht werden, diese Systeme können jedoch versagen oder vom zweiten Nutzer übersehen werden. Zudem können nicht alle Defekte und Auffälligkeiten mittels Systemen überwacht werden.

Vorzugsweise erfolgt ein Übermitteln der übermittelten und/oder empfangenen Fahrzeugzustandsmeldung an eine Behörde, sofern ein Parkmodus der zweiten mobilen Vorrichtung und/oder des zweiten Kraftfahrzeugs aktiviert ist. Hierdurch wird insbesondere die Möglichkeit sichergestellt, dass Diebstähle schnell erkannt werden, da vorliegend bei Veränderung einer Position des Kraftfahrzeugs von einem Diebstahl auszugehen ist, da der Parkmodus indiziert, dass der Nutzer des zweiten Kraftfahrzeugs dieses ordnungsgemäß zum Parken abgestellt hat und nur bei Deaktivierung des Parkmodus vor einer Positionsveränderung auch ein rechtmäßiger Zugriff auf das Kraftfahrzeug stattfindet.

Ein weiterer Aspekt der Erfindung betrifft ein Computerprogramm, umfassend Befehle, die bei der Ausführung des Programms durch einen Computer, wie beispielsweise eine Steuereinheit eines Kraftfahrzeugs, diesen veranlassen, das erfindungsgemäße Verfahren durchzuführen.

Die Anweisungen der Computerprogramme sind ebenfalls bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen, abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt, vorliegen kann, um die Schritte des erfindungsgemäßen Verfahrens auszuführen, ohne vom erfindungsgemäßen Verfahren abzuweichen.

Die einzelnen Verfahrensschritte des erfindungsgemäßen Verfahrens sind bevorzugt als ein oder mehrere Prozesse ausgebildet, die auf einem oder mehreren Prozessoren in einem oder mehreren elektronischen Rechengeräten laufen und beim Ausführen von einem oder mehreren Computerprogrammen erzeugt werden. Die Rechengeräte sind dabei bevorzugt dazu ausgebildet, mit anderen Komponenten, insbesondere einer Steuereinheit eines Kraftfahrzeugs, zusammenzuarbeiten, um die hierin beschriebenen Funktionalitäten zu verwirklichen.

Ein weiterer Aspekt der Erfindung betrifft eine Steuereinheit, die dazu eingerichtet ist, das erfindungsgemäße Verfahren durchzuführen.

Ein weiterer Aspekt betrifft ein Kraftfahrzeug, das eine Kommunikationsschnittstelle, zumindest ein Zustandserfassungsmittel und/oder eine Eingabekonsole zum Erfassen und/oder Empfangen von ersten Zustandsdaten und/oder zweiten Zustandsdaten und eine Steuereinheit, die dazu eingerichtet ist, das oben beschriebene Verfahren durchzuführen, umfasst. Die im Zusammenhang mit dem Verfahren beschriebenen Merkmale und Vorteile können in analoger Weise mit dem Kraftfahrzeug kombiniert und deren Vorteile erzielt werden.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigt:

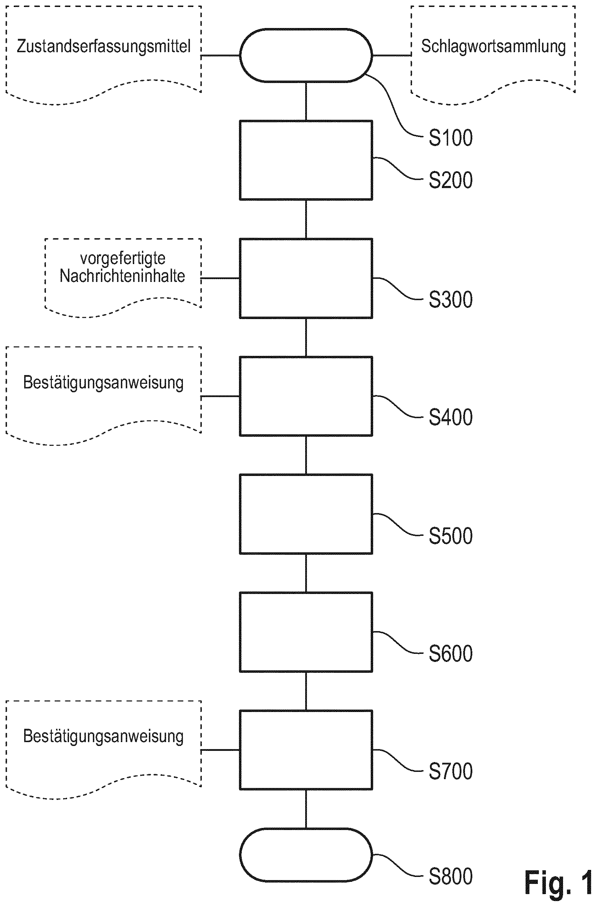

Figur 1 eine schematische Darstellung eines erfindungsgemäßen Verfahrens.

Figur 1 zeigt eine schematische Darstellung eines erfindungsgemäßen Verfahrens einer ersten mobilen Vorrichtung gemäß einem ersten Aspekt der Erfindung in Kombination mit einem erfindungsgemäßen Verfahren einer zweiten mobilen Vorrichtung gemäß einem zweiten Aspekt der Erfindung. Demnach erfolgt die Kombination des Verfahrens einer ersten mobilen Vorrichtung zur Erkennung und Übermittlung einer optisch erfassbaren Information eines Kraftfahrzeugs mit dem Verfahren einer zweiten mobilen Vorrichtung zum Empfang und zur Erkennung einer optisch erfassbaren Information eines Kraftfahrzeugs.

Vorliegend handelt es sich bei dem betreffenden Kraftfahrzeug beispielsweise um ein zweites Kraftfahrzeug, dessen Kofferraum offen ist und das sich momentan fortbewegt. Ein zweiter Nutzer, der der Fahrer des zweiten Kraftfahrzeugs ist, hat keine Kenntnis von dem offenen Kofferraum, der somit eine potentielle Gefahrenquelle aufgrund möglicherweise herausfallender Gegenstände darstellt. Eine erste mobile Vorrichtung umfasst gemäß der vorliegenden Ausführung ein Kraftfahrzeug, das im Folgenden als erstes Kraftfahrzeug bezeichnet wird. Vorliegend umfasst das erste Kraftfahrzeug eine Außenkamera und/oder eine Infrarotkamera. Ein erster Nutzer ist vorliegend der Fahrer des ersten Kraftfahrzeugs. Eine zweite mobile Vorrichtung umfasst gemäß der vorliegenden Ausführung ein Kraftfahrzeug, das im Folgenden als zweites Kraftfahrzeug bezeichnet wird und somit in diesem Fall identisch mit dem betreffende Kraftfahrzeug ist, dessen Kofferraum offen ist. Ferner ist dem zweiten Kraftfahrzeug ein Smartphone des zweiten Nutzers zugewiesen. Die Zuweisung basiert auf einer Festlegung von dem zweiten Nutzer.

In einem ersten Verfahrensschritt S100 werden erste Zustandsdaten erfasst und/oder zweite Zustandsdaten eingegeben. Die Außenkamera des ersten Kraftfahrzeugs detektiert durch eine Aufnahme von Bildern die äußere Erscheinung des zweiten Kraftfahrzeugs in Form von Bilddaten. Diese Bilddaten werden als verarbeitbare Daten eine Steuereinheit des ersten Kraftfahrzeugs weitergeleitet, wodurch die die ersten Zustandsdate erfasst sind. Alternativ oder zusätzlich erfolgt eine Eingabe von zweite Zustandsdaten durch den ersten Nutzer, vorzugsweise über eine Eingabekonsole des ersten Kraftfahrzeugs. Hierbei steht dem ersten Nutzer eine Schlagwortsammlung zur Verfügung, anhand der er ein charakteristisches Schlagwort auswählt und somit eingibt.

In eine nächsten Verfahrensschritt S200 erfolgt ein Ermitteln eines wahrnehmbaren Zustands. Anhand der ersten und/oder zweiten Zustandsdaten wird beispielsweise durch die Steuereinheit des ersten Kraftfahrzeugs abgeleitet, welcher Defekt oder welche Auffälligkeit vorliegt und somit der wahrnehmbare Zustand ermittelt. Vorliegend liegen erste Zustandsdaten in Form verarbeitbarer Bilddaten vor, anhand derer die Ermittlung eines offenen Kofferraums als wahrnehmbarer Zustand erfolgt. Durch die zweiten eingegebenen Zustandsdaten wird der gleiche wahrnehmbare Zustand ermittelt. Beispielsweise hat der erste Nutzer zwei Schlagwörter wie "Heckklappe" oder "Kofferraum" und "offen" aus der Schlagwortsammlung eingegeben, sodass anhand dessen ebenfalls ein offener Kofferraum als wahrnehmbarer Zustand ermittelt wurde.

In einem folgenden Verfahrensschritt S300 erfolgt ein Erstellen einer

Fahrzeugzustandsmeldung. Vorliegend wird die erstellte Fahrzeugzustandsmeldung unter Verwendung vorgefertigter Nachrichten ermittelt. Es steht somit eine vorgefertigte Nachrichteninhaltssammlung zur Verfügung, die eine Vielzahl an vorgefertigten Nachrichteninhalten umfasst. Entsprechend kann eine solche Fahrzeugzustandsmeldung dann "Achtung, Sie fahren mit offenem Kofferraum" lauten. Dies Fahrzeugzustandsmeldung wird vorzugsweise mit den ersten Zustandsdaten kombiniert. Mit anderen Worten umfasst die Fahrzeugzustandsmeldung zum einen die besagte Nachricht und zum anderen ein Foto des offenen Kofferraums.

Anschließend wird in einem Verfahrensschritt S400 eine Freigabe der erstellten Fahrzeugzustandsmeldung ermittelt. Dies erfolgt durch Prüfung einer Bestätigungsanweisung des ersten Nutzers oder der ersten mobilen Vorrichtung. Dabei erfolgt die Bestätigung vorzugsweise durch den ersten Nutzer oder die Steuereinheit des ersten Kraftfahrzeugs. Beispielsweise liegen nur erste Zustandsdaten vor. Bei schlechter Sicht aufgrund von Nebel und Ähnlichem tritt beispielsweise die Situation auf, dass die erfassten Bilder undeutlich sind. Möglicherweise transportiert der erste Nutzer in seinem Kofferraum einen Gegenstand der das Schließen des Kofferraums verhindert, hat jedoch die Ladung ausreichend gesichert. In diesem Fall kann der erste Nutzer eine negative Bestätigungsanweisung vornehmen und die erstellte Fahrzeugzustandsmeldung verneinen. Umgekehrt ist auch der Fall denkbar, dass der erste Nutzer fehlerhafte Eingaben vorgenommen hat, die dann durch eine Steuereinheit überprüft werden. Lässt sich eine Richtigkeit der erstellten Fahrzeugzustandsmeldung feststellen, erfolgt eine positive Bestätigung.

Danach erfolgt in einem Verfahrensschritt S500 bei positiver Bestätigungsanweisung ein Übermitteln der erstellten Fahrzeugzustandsmeldung an die zweite mobile Vorrichtung.

In einem Verfahrensschritt S600 beginnt dann das Verfahren der zweiten mobilen Vorrichtung gemäß einem zweiten Aspekt der Erfindung. Dabei erfolgt ein Empfangen der erstellten Fahrzeugzustandsmeldung.

Auch in diesem Fall wird in einem Verfahrensschritt S700 eine Freigabe der empfangenen Fahrzeugzustandsmeldung basierend auf einer Bestätigungsanweisung nun jedoch des zweiten

Nutzers oder der zweiten mobilen Vorrichtung ermittelt. Demnach entscheidet sich dann beispielsweise der zweite Nutzer, ob er die empfangene Fahrzeugzustandsmeldung freigibt. Beispielsweise ist er sich eines Problems bewusst oder im Begriff das zweite Kraftfahrzeug anzuhalten, um dann in Ruhe das zweite Kraftfahrzeug zu kontrollieren.

Danach erfolgt in einem Verfahrensschritt S800 bei positiver Bestätigungsanweisung ein Ausgeben der empfangenen Fahrzeugzustandsmeldung.

### Bezugszeichenliste

- S100: Erfassen erster Zustandsdaten und/oder Eingeben zweiter Zustandsdaten
- S200: Ermitteln eines wahrnehmbaren Zustands
- S300: Erstellen einer Fahrzeugzustandsmeldung
- S400: Ermitteln einer Freigabe der erstellten Fahrzeugzustandsmeldung
- S500: Übermitteln der erstellten Fahrzeugzustandsmeldung
- S600: Empfangen einer erstellten Fahrzeugzustandsmeldung
- S700: Ermitteln einer Freigabe der empfangenen Fahrzeugzustandsmeldung
- S800: Ausgeben der empfangenen Fahrzeugzustandsmeldung

## Patentansprüche

1. Verfahren einer ersten mobilen Vorrichtung zur Erkennung und Übermittlung einer optisch erfassbaren Information eines Kraftfahrzeugs, folgende Schritte umfassend:
- Ermitteln eines wahrnehmbaren Zustands einer außenliegenden Fahrzeugkomponente eines zweiten Kraftfahrzeugs und/oder eines wahrnehmbaren Zustands eines mit dem zweiten Kraftfahrzeug verbundenen und/oder eines sich in dem zweiten Kraftfahrzeug befindenden Objekts basierend auf von der ersten mobilen Vorrichtung erfassten ersten Zustandsdaten und/oder von einem ersten Nutzer in die erste mobile Vorrichtung eingegebenen zweiten Zustandsdaten;
- Erstellen einer Fahrzeugzustandsmeldung basierend auf dem ermittelten wahrnehmbaren Zustand;
- Übermitteln der erstellten Fahrzeugzustandsmeldung an eine zweite mobile Vorrichtung.

2. Verfahren einer zweiten mobilen Vorrichtung zum Empfang und zur Erkennung einer optisch erfassbaren Information eines Kraftfahrzeugs, folgende Schritte umfassend:
- Empfangen einer von einer ersten mobilen Vorrichtung übermittelten, basierend auf einem ermittelten wahrnehmbaren Zustand einer außenliegenden Fahrzeugkomponente eines zweiten Kraftfahrzeugs und/oder eines wahrnehmbaren Zustands eines mit dem zweiten Kraftfahrzeug verbundenen und/oder eines sich in dem zweiten Kraftfahrzeug befindenden Objekts erstellten Fahrzeugzustandsmeldung.

3. Verfahren nach Anspruch 2, wobei das Verfahren ferner umfasst:
- Ausgeben der empfangenen Fahrzeugzustandsmeldung.

4. Verfahren nach einem der vorhergehenden Ansprüche, wobei das Verfahren ferner umfasst:
- Ermitteln einer Freigabe der erstellten Fahrzeugzustandsmeldung und/oder der empfangenen Fahrzeugzustandsmeldung basierend auf einer Bestätigungsanweisung; und
- Übermitteln der erstellten Fahrzeugzustandsmeldung und/oder Ausgeben der empfangenen Fahrzeugzustandsmeldung, sofern die ermittelte Freigabe eine Zustimmung anzeigt.

5. Verfahren nach Anspruch 4, wobei die Bestätigungsanweisung durch den ersten Nutzer, einen zweiten Nutzer der zweiten mobilen Vorrichtung und/oder eine Steuereinheit der ersten und/oder zweiten mobilen Vorrichtung erfolgt.

6. Verfahren nach einem der vorhergehenden Ansprüche, wobei eine positive Bestätigungsanweisung nach Ablauf eines Zeitintervalls angenommen wird.

7. Verfahren nach einem der Ansprüche 4 bis 6, wobei das Verfahren vor dem Ermitteln einer Freigabe der erstellten Fahrzeugzustandsmeldung und/oder der empfangenen Fahrzeugzustandsmeldung basierend auf einer Bestätigungsanweisung ferner umfasst:
- Ermitteln einer Signifikanz der erstellten Fahrzeugzustandsmeldung und/oder der empfangenen Fahrzeugzustandsmeldung basierend auf einer Sicherheitsrelevanz, einer Unsicherheit und/oder einer Übereinstimmung der ersten Zustandsdaten und/oder der zweiten Zustandsdaten.

8. Verfahren nach einem der vorhergehenden Ansprüche, wobei die erste und/oder zweite mobile Vorrichtung ein Kraftfahrzeug umfasst.

9. Verfahren nach einem der vorhergehenden Ansprüche, wobei das Verfahren ferner umfasst:
- Übermitteln der übermittelten und/oder empfangenen Fahrzeugzustandsmeldung an ein der zweiten mobilen Vorrichtung zugewiesenes Smartphone.

10. Verfahren nach einem der vorhergehenden Ansprüche, wobei die erstellte Fahrzeugzustandsmeldung vorgefertigte Nachrichteninhalte, die ersten Zustandsdaten und/oder die zweiten Zustandsdaten umfasst.

11. Verfahren nach einem der vorhergehenden Ansprüche, wobei die von dem ersten Nutzer eingegebenen zweiten Zustandsdaten ein Schlagwort aus einer Schlagwortsammlung umfassen.

12. Verfahren nach einem der vorhergehenden Ansprüche, wobei das Verfahren ferner umfasst:
Verifizieren der einen der ersten und/oder zweiten Zustandsdaten anhand der anderen der ersten und/oder zweiten Zustandsdaten

13. Verfahren nach einem der vorhergehenden Ansprüche, wobei die erfassten ersten Zustandsdaten unter Verwendung von Zustandserfassungsmitteln der ersten mobilen Vorrichtung, vorzugsweise einer Kamera und/oder einer Infrarotkamera, erfasst werden.

14. Verfahren nach einem der vorhergehenden Ansprüche, wobei das Verfahren das Ermitteln eines wahrnehmbaren Zustands einer außenliegenden Fahrzeugkomponente einer Vielzahl von zweiten Kraftfahrzeugen und/oder eines wahrnehmbaren Zustands eines mit einer Vielzahl von zweiten Kraftfahrzeugen verbundenen Objekts umfasst, wobei das Übermitteln der erstellten Fahrzeugzustandsmeldung an eine Vielzahl von zweiten mobilen Vorrichtungen erfolgt.

15. Verfahren nach einem der vorhergehenden Ansprüche, wobei das zweite Kraftfahrzeug ein parkendes Kraftfahrzeug umfasst und die von dem ersten Nutzer eingegebenen zweiten Zustandsdaten eine Bildaufnahme umfassen.

16. Verfahren nach Anspruch 15, wobei das Verfahren ferner umfasst:
- Verifizieren der ermittelten Fahrzeugzustandsmeldung basierend auf einer Bildauswertung der Bildaufnahme.

17. Verfahren nach einem der vorhergehenden Ansprüche, wobei der wahrnehmbare Zustand der außenliegenden Fahrzeugkomponente des zweiten Kraftfahrzeugs und/oder des mit dem zweiten Kraftfahrzeug verbundenen und/oder des sich in dem zweiten Kraftfahrzeug befindenden Objekts einen defekten Scheinwerfer, einen offenen Kofferraum, eine ungesicherte Ladung, einen beschädigten Reifen, aktivierte Bremsleuchten mit gleichzeitig aktivierten Warnblinkern, sofern das zweite Kraftfahrzeug ein fahrendes Kraftfahrzeug ist, und ein angelassenes Licht, ein Tier/Kleinkind im Auto, ein offenes Fenster, ein aufgebrochenes Auto, einen offenen Kofferraum, einen beschädigten Reifen, eine Autokralle am Reifen und oder ein ordnungswidrig abgestelltes Kraftfahrzeug, sofern das zweite Kraftfahrzeug ein parkendes Kraftfahrzeug ist, umfasst.

18. Verfahren nach einem der vorhergehenden Ansprüche, wobei ein Übermitteln der übermittelten und/oder empfangenen Fahrzeugzustandsmeldung an eine Behörde erfolgt, sofern ein Parkmodus der zweiten mobilen Vorrichtung und/oder des zweiten Kraftfahrzeugs aktiviert ist.

19. Steuereinheit, die dazu eingerichtet ist, das Verfahren nach einem der Ansprüche 1 bis 18 durchzuführen.

20. Kraftfahrzeug, aufweisend:
- eine Kommunikationsschnittstelle zum Datenaustausch mit einer mobilen Vorrichtung, zumindest ein Zustandserfassungsmittel und/oder eine Eingabekonsole zum Erfassen und/oder Empfangen von ersten Zustandsdaten und/oder zweiten Zustandsdaten, und
- eine Steuereinheit nach Anspruch 19.
